# EUROPÄISCHE PATENTSCHRIFT

(11) **EP 3 433 908 B1**
(45) Veröffentlichungstag und Bekanntmachung des Hinweises auf die Patenterteilung: **15.04.2020**
(21) Anmeldenummer: 17714149.6
(22) Anmeldetag: 16.03.2017
(51) Int. Cl.: H01R 13/62, H01R 103/00, H01R 13/631, H01R 13/22, H01R 13/44, H01R 24/60

(54) **KONTAKTIERUNGSSYSTEM ZUM HERSTELLEN EINER ELEKTRISCHEN VERBINDUNG ZWISCHEN EINEM PRIMÄREN GERÄT UND EINEM SEKUNDÄREN GERÄT**
CONTACTING SYSTEM FOR PRODUCING AN ELECTRICAL CONNECTION BETWEEN A PRIMARY DEVICE AND A SECONDARY DEVICE
SYSTÈME DE MISE EN CONTACT POUR ÉTABLIR UNE CONNEXION ÉLECTRIQUE ENTRE UN APPAREIL PRINCIPAL ET UN APPAREIL SECONDAIRE

(30) Priorität: 25.03.2016 AT 502512016
(43) Veröffentlichungstag der Anmeldung: 30.01.2019
(73) Patentinhaber: easE-Link GmbH, 8010 Graz (AT)
(72) Erfinder: LEIBETSEDER, Manuel, 8042 Graz (AT); STOCKINGER, Hermann, 8010 Graz (AT)
(74) Vertreter: Prinz & Partner mbB
(86) Internationale Anmeldenummer: PCT/AT2017/060069
(87) Internationale Veröffentlichungsnummer: WO 2017/161394

(56) Entgegenhaltungen:
- WO-A2-2008/020463
- US-B2- 8 307 967

## Beschreibung

Die Erfindung betrifft ein Kontaktierungssystem zum Herstellen einer elektrischen Verbindung zwischen einem primären Gerät und einem sekundären Gerät mit zumindest zwei zueinander elektrisch isolierten Polen, mit:
einem primären Übertragungselement, das eine Mehrzahl an strukturiert angeordneten gegeneinander elektrisch isolierten primären Kontaktflächen aufweist, wobei jede primäre Kontaktfläche über einen jeweiligen Schalter mit zumindest einem Pol des primären Geräts verbunden ist, und mit
einem sekundären Übertragungselement, das eine Mehrzahl an gegeneinander elektrisch isolierten sekundären Kontaktflächen aufweist, wobei jeder Pol des sekundären Geräts mit zumindest einer sekundären Kontaktfläche elektrisch verbunden ist, wobei das primäre Übertragungselement zum Kontaktieren mit dem sekundären Übertragungselement ausgebildet ist und wobei bei kontaktiertem primären Übertragungselement und sekundären Übertragungselement die sekundären Kontaktflächen zumindest einen Teil der primären Kontaktflächen berühren, und mit
Steuermitteln, die bei kontaktiertem primären Übertragungselement und sekundären Übertragungselement zum Ermitteln primärer Kontaktflächen ausgebildet sind, die eine sekundäre Kontaktfläche berühren, und die zum Herstellen einer elektrischen Verbindung, durch Ansteuern der Schalter über die ermittelten primären Kontaktflächen und die sekundären Kontaktflächen, zwischen den einzelnen Polen des primären Geräts und den einzelnen Polen des sekundären Geräts ausgebildet sind.

Ein solches Kontaktierungssystem ist beispielsweise aus dem Dokument US 8,307,967 B2 bekannt, wobei das sekundäre Gerät durch ein Fahrzeug gebildet ist und das primäre Gerät durch eine Energieversorgungseinheit gebildet ist. Das primäre Übertragungselement ist in der Fahrbahn eines Parkplatzes eingelassen und das sekundäre Übertragungselement ist an einem Unterboden des Fahrzeugs befestigt. Wenn das durch einen Elektromotor angetriebene Fahrzeug auf dem Parkplatz abgestellt wird, dann senkt eine Mechanik das primäre Übertragungselement auf das sekundäre Übertragungselement ab, wodurch elektrischer Strom zum Aufladen der Energieversorgung des Fahrzeugs über Kontaktflächen der Übertragungselemente fließen kann.

Das in der Fahrbahn des Parkplatzes eingelassene primäre Übertragungselement ist durch zwei Reihen von rechteckförmigen oder rasterförmig angeordneten runden elektrisch gegeneinander isolierten primären Kontaktflächen gebildet. Dem primären Übertragungselement sind Steuerungsmittel zugeordnet, die mit jeder der primären Kontaktflächen einerseits und mit einem Pluspol und einen Minuspol einer Niederspannungsenergiequelle im Bereich von 12 bis 24 Volt andererseits verbunden sind. Mittels der Steuerungsmittel kann jede der primären Kontaktflächen, die vorerst potentialfrei geschaltet sind, mit dem Pluspol oder mit dem Minuspol verbunden werden.

Das in der US 8,307,967 B2 offenbarte sekundäre Übertragungselement am Fahrzeug weist eine Reihe quadratischer sekundärer Kontaktflächen auf, wobei die Größen der Kontaktflächen so gewählt wurden, dass es zu keinen Kurzschlüssen der Kontaktflächen eines Übertragungselements durch Kontaktflächen des anderen Übertragungselements kommen kann. Nach dem mechanischen Absenken des sekundären Übertragungselements auf das primäre Übertragungselement ermitteln die Steuerungsmittel welche primären und sekundären Kontaktflächen im elektrischen Kontakt stehen und verbinden dann die passenden primären Kontaktflächen des primären Übertragungselements mit dem Pluspol und die passenden sekundären Kontaktflächen des sekundären Übertragungselements mit dem Minuspol der Niederspannungsquelle, damit die Energieversorgung des Fahrzeugs geladen wird.

Bei dem bekannten Kontaktierungssystem hat sich als Nachteil erwiesen, dass mit der Niederspannungsquelle die Ladevorgänge relativ lange dauern, weshalb die Energieversorgung des Fahrzeugs bei einer Parkdauer von beispielsweise nur einer Stunde nicht vollständig geladen wird. Aus Sicherheitsgründen ist die Verwendung von über dem Niederspannungsbereich liegenden Spannungen zwischen Pluspol und Minuspol nicht durchführbar, da es sonst zu Elektrisierungen kommen kann bzw. da das Fahrzeug nicht entsprechend den Schutzbedingungen abgesichert ist.

Der Erfindung liegt die Aufgabe zugrunde ein Kontaktierungssystem zu schaffen, bei dem bei einer Energieübertragung mit Spannungen über dem Niederspannungsbereich zwischen primärem Gerät und sekundärem Gerät trotzdem die notwendige Sicherheit gewährleistet ist, um Elektrisierungen zu vermeiden.

Erfindungsgemäß wird die vorliegende Aufgabe dadurch gelöst, dass
an dem primären Übertragungselement mehrere primäre PE-Kontaktflächen ausgebildet sind, die strukturiert zwischen den primären Kontaktflächen zu den primären Kontaktflächen elektrisch isoliert auf dem primären Übertragungselement angeordnet sind, dass
an dem sekundären Übertragungselement zumindest eine sekundäre PE-Kontaktfläche ausgebildet ist, die zu den sekundären Kontaktflächen elektrisch isoliert ist, und dass
das Kontaktierungssystem Positionierungsmittel aufweist, welche Positionierungsmittel bei Kontaktierung des primären Übertragungselements mit dem sekundären Übertragungselement das sekundäre Übertragungselement und das primäre Übertragungselement so gegeneinander ausrichten, dass die zumindest eine sekundäre PE-Kontaktfläche zumindest eine primäre PE-Kontaktfläche berührt.

Hierdurch ist der Vorteil erhalten, dass bei kontaktiertem primären und sekundären Übertragungselement die zumindest eine sekundäre PE-Kontaktfläche immer mit zumindest einer primären PE-Kontaktfläche verbunden ist. Infolge kann über die zumindest eine sekundäre PE-Kontaktfläche und die primären PE-Kontaktflächen eine schaltungsfreie Verbindung zwischen dem primären Gerät und dem sekundären Gerät hergestellt werden. Durch die schaltungsfreie Verbindung ist, bevor von den Steuermitteln eine elektrische Verbindung zur Stromübertragung zwischen den einzelnen Polen des primären Geräts und den einzelnen Polen des sekundären Geräts hergestellt ist, eine direkte elektrische Verbindung zwischen dem primären und dem sekundären Gerät hergestellt.

Bevorzugt ist entweder die zumindest eine sekundäre PE-Kontaktfläche über einen Schutzleiter des sekundären Geräts oder die primäre PE-Kontaktfläche über einen Schutzleiter des primären Geräts mit dem Erdpotential verbunden, wodurch das primäre Gerät und das sekundäre Gerät bei kontaktiertem primären Übertragungselement und sekundären Übertragungselement geerdet sind. Daraus ergibt sich der Vorteil dass auch bei an den Polen des primären Geräts oder des sekundären Geräts angelegten Spannungen über 60V eine sichere Energieübertragung zwischen dem primären Gerät und dem sekundären Gerät sichergestellt ist.

In einer weiteren Ausführungsvariante kann ein Teil der Pole auch zur Informationsübertragung zwischen primärem und sekundärem Gerät genutzt werden.

Beispielsweise ist das sekundäre Gerät durch eine Ladeschaltung eines Fahrzeugs, insbesondere eines Fahrzeugs mit Elektroantrieb, gebildet und das primäre Gerät ist durch eine fest installierte Energieversorgungseinheit gebildet. Das primäre Übertragungselement ist dabei vorteilhaft in der Fahrbahn einer Parkfläche, einer Garage oder eines Kreuzungsbereichs eingelassen und das sekundäre Übertragungselement ist an einer Unterseite des Elektrofahrzeuges absenkbar und anhebbar montiert. Unter dem Begriff Kreuzungsbereich werden vor allem die Bereiche vor Ampel geregelten Kreuzungen gesehen, aber auch Fußgängerübergänge. Die Energieversorgungseinheit ist, wie jedes fachmännisch angeschlossene Gerät, das im Spannungsbereich über 60V betrieben wird und eine hohe Leistung überträgt, mittels eines Schutzleiters, auch PE-Leiter genannt, geerdet. Durch die erhöhte Spannung ist der Vorteil erhalten, dass eine Energieversorgung des Fahrzeuges schneller aufladbar ist und das Fahrzeug schneller wieder einsatzbereit ist. Mittels der primären PE-Kontaktflächen und der zumindest einen sekundären PE-Kontaktfläche wird infolge bei kontaktiertem primären Übertragungselement und sekundären Übertragungselement die Ladeschaltung des Fahrzeuges bzw. das gesamte Fahrzeug sicher mit dem Erdpotential verbunden, wodurch die Gefahr von Stromschlägen während der Ladung des Fahrzeugs verringert wird.

Vorteilhaft sind die Kontaktierungsmittel durch ein Magnetkopplungselement gebildet, welches Magnetkopplungselement aus zumindest einem ersten Teil und zumindest einem zweiten Teil besteht, wobei das zumindest eine erste Teil in dem primären Übertragungselement ausgebildet ist und das zumindest eine zweite Teil in dem sekundären Übertragungselement ausgebildet ist. Bevorzugt ist das zumindest eine erste Teil des Magnetkopplungselements durch einen Elektromagneten oder Permanentmagneten gebildet und das zumindest eine zweite Teil durch ein ferromagnetisches Element, einen Elektromagneten oder einen Permanentmagneten gebildet, oder das zumindest eine erste Teil des Magnetkopplungselements ist durch ein ferromagnetisches Element gebildet und das zumindest eine zweite Teil ist durch einen Elektromagneten oder einen Permanentmagneten gebildet. Hierdurch ist der Vorteil erhalten, dass das erste und das zweite Teil des Magnetkopplungselements komplett unsichtbar in das primäre Übertragungselement und das sekundäre Übertragungselement integrierbar sind und somit eine Optik des Kontaktierungssystems nicht negativ beeinträchtigt wird. Auch der Verschmutzung des primären und sekundären Übertragungselements wird durch eine glatte Oberfläche vorteilhafterweise vorgebeugt.

Vorteilhaft ist in jeder primären PE-Kontaktfläche ein erstes Teil des Magnetkopplungselements ausgebildet und vorteilhaft ist in der zumindest einen sekundären PE-Kontaktfläche ein zweites Teil ausgebildet. Bevorzugt ist das zweite Teil ausgebildet in der zumindest einen sekundären PE-Kontaktfläche ein Elektromagnet und bevorzugt sind die ersten Teile ausgebildet in den primären PE-Kontaktflächen ferromagnetische Inlays. Der Elektromagnet ist vorteilhaft bei der Kontaktierung von dem primären und sekundären Übertragungselement und bei in Kontakt befindlichem primären und sekundären Übertragungselement aktiviert. Hierdurch ist der Vorteil erhalten, dass eine besonders zuverlässige Kontaktierung des primären Elements mit dem sekundären Element aufgrund magnetischer Kräfte gewährleistet ist.

In einer weiteren bevorzugten Ausführungsvariante weist das primäre Übertragungselement eine primäre Oberfläche auf und das sekundäre Übertragungselement weist eine sekundäre Oberfläche auf, wobei die Positionierungsmittel durch eine erste räumliche Struktur der primären Oberfläche und eine zweite räumliche Struktur der sekundären Oberfläche gebildet sind. Bevorzugt bildet die erste räumliche Struktur der primären Oberfläche die Negativform der räumlichen Struktur der sekundären Oberfläche ab. Hierdurch ist der Vorteil erhalten, dass bei Kontaktierung des primären Übertragungselements und des sekundären Übertragungselements das primäre und das sekundäre Übertragungselement automatisch in die richtige Position zueinander verlagert werden und auf das Vorsehen von zusätzlichen aktiven Positionierungsmitteln oder stromverbrauchenden Positionierungsmitteln verzichtet werden kann. Die primäre Oberfläche kann zum Beispiel mit einer Mehrzahl an kegeligen Vertiefungen versehen sein und aus der sekundären Oberfläche ragen eine Mehrzahl an Kegelstümpfen.

In einer weiteren vorteilhaften Ausführungsvariante sind die Kontaktierungsmittel durch eine Verfahreinheit, welche Verfahreinheit auf das primäre und/oder das sekundäre Übertragungselement wirkt und zum Kontaktieren des primären Übertragungselements mit dem sekundären Übertragungselement ausgebildet ist, und durch zumindest einen Sensor gebildet. Der zumindest eine Sensor ist in dem sekundären Übertragungselement und/oder dem primären Übertragungselement ausgebildet, wobei bei Kontaktierung des primären Übertragungselements mit dem sekundären Übertragungselement der zumindest eine Sensor eine Relativposition zwischen primärem Übertragungselement und sekundärem Übertragungselement erfasst und wobei die Verfahreinheit so entsprechend der erfassten Relativposition angesteuert wird, dass die zumindest eine sekundäre PE-Kontaktfläche zumindest eine primäre PE-Kontaktfläche berührt. Unter einem Sensor wird in diesem Zusammenhang vor allem eine Kamera, ein optischer Sensor oder eine elektromagnetischer Sensor gesehen. Hierdurch ist der Vorteil erhalten, dass auch bei einem größeren Abstand, von zum Beispiel 10 bis 20 Zentimetern, zwischen primärem Übertragungselement und sekundärem Übertragungselement das primäre Übertragungselement und das sekundäre Übertragungselement zueinander ausgerichtet werden können. Die Verfahreinheit ist vorteilhaft durch einen am Fahrzeug gelenkig gelagerten Arm und zumindest einen Aktuator gebildet, wobei der zumindest eine Aktuator auf den Arm wirkt. Mittels dem zumindest einen Aktuator ist die Position des Arms veränderbar.

Es sei hier noch angemerkt, dass unter dem Begriff "bei Kontaktierung" der Vorgang der Kontaktierung zwischen primärem Übertragungselement und sekundärem Übertragungselement gesehen wird, also die Bewegung um das zueinander beabstandete primäre und sekundäre Übertragungselement zu kontaktierten.

Vorteilhaft weisen die primären Kontaktflächen und die sekundären Kontaktflächen und/oder die primären PE-Kontaktflächen und die zumindest eine sekundäre PE-Kontaktfläche im Wesentlichen die gleiche äußere Form auf und sind polygonal oder rund. Hierdurch ist der Vorteil erhalten, dass sich der fertigungstechnische Aufwand bei der Herstellung der Kontaktflächen verringert.

Vorteilhaft richten die Positionierungsmittel bei Kontaktierung des primären Übertragungselements mit dem sekundären Übertragungselement das primäre Übertragungselement und das sekundäre Übertragungselement so gegeneinander aus, dass die zumindest eine sekundäre PE-Kontaktfläche zumindest eine primäre PE-Kontaktfläche zur Gänze oder zumindest mit einer größtmöglichen Fläche überdeckt. Hierdurch ist sichergestellt, dass eine ausreichend gute Verbindung zum Schutz vor Elektrisierungen zwischen dem primären Gerät und dem sekundären Gerät hergestellt ist.

Bevorzugt sind die primären Kontaktflächen des primären Übertragungselements so gegenüber den sekundären Kontaktflächen des sekundären Übertragungselements angeordnet, dass bei Berührung der zumindest einen sekundären PE-Kontaktfläche mit zumindest einer primären PE-Kontaktfläche jede sekundäre Kontaktfläche zumindest eine primäre Kontaktfläche zur Gänze oder zumindest mit einer größtmöglichen Fläche überdeckt. Hierdurch ist der Vorteil erhalten, dass auch große Leistungen über die primären und sekundären Kontaktflächen übertragen werden können.

Vorteilhaft ist die zumindest eine sekundäre PE-Kontaktfläche ringförmig ausgebildet, wobei die zumindest eine sekundäre PE-Kontaktfläche auf dem sekundären Übertragungselement die sekundären Kontaktfläche umgebend angeordnet ist. Hierdurch ist der Vorteil erhalten, dass bei kontaktiertem primären und sekundären Übertragungselement, bei einer hergestellten elektrischen Verbindung zwischen den einzelnen Polen des primären Geräts und den einzelnen Polen des sekundären Geräts und bei an den Polen des primären Geräts oder den Polen des sekundären Geräts angelegten Spannungen eine Berührung der stromführenden Elemente von außen ausgeschlossen ist, da sämtliche stromführenden Elemente zur Gänze abgedeckt sind.

Weitere vorteilhafte Ausgestaltungen des erfindungsgemäßen Kontaktierungssystems werden in weiterer Folge anhand der Figuren näher erläutert.
Figur 1 zeigt eine erste Ausführungsvariante eines primären Übertragungselements in einer schematischen Ansicht.
Figur 2 zeigt eine weitere Ausführungsvariante eines primären Übertragungselements in einer schematischen Ansicht.
Figur 3 zeigt eine erste Ausführungsvariante eines sekundären Übertragungselements in einer schematischen Ansicht.
Figur 4 zeigt eine Ausführungsvariante des erfindungsgemäßen Kontaktierungssystems mit kontaktiertem primären Übertragungselement gemäß Figur 1 und sekundären Übertragungselement gemäß Figur 3 in einer schematischen Ansicht.
Figur 5 zeigt die Ausführungsvariante des erfindungsgemäßen Kontaktierungssystems gemäß Figur 4 in einer schematischen Schnittansicht entlang des Schnitts A-A.
Figur 6 zeigt eine weitere Ausführungsvariante eines erfindungsgemäßen Kontaktierungssystems mit kontaktiertem primären Übertragungselement und sekundären Übertragungselement in einer schematischen Ansicht.
Figur 7 zeigt eine weitere Ausführungsvariante eines erfindungsgemäßen Kontaktierungssystems mit kontaktiertem primären Übertragungselement und sekundären Übertragungselement in einer schematischen Ansicht.
Figur 8 zeigt eine weitere Ausführungsvariante eines erfindungsgemäßen Kontaktierungssystems mit kontaktiertem primären Übertragungselement und sekundären Übertragungselement in einer schematischen Ansicht.
Figur 9 zeigt eine weitere Ausführungsvariante eines erfindungsgemäßen Kontaktierungssystems mit kontaktiertem primären Übertragungselement und sekundären Übertragungselement in einer schematischen Ansicht.

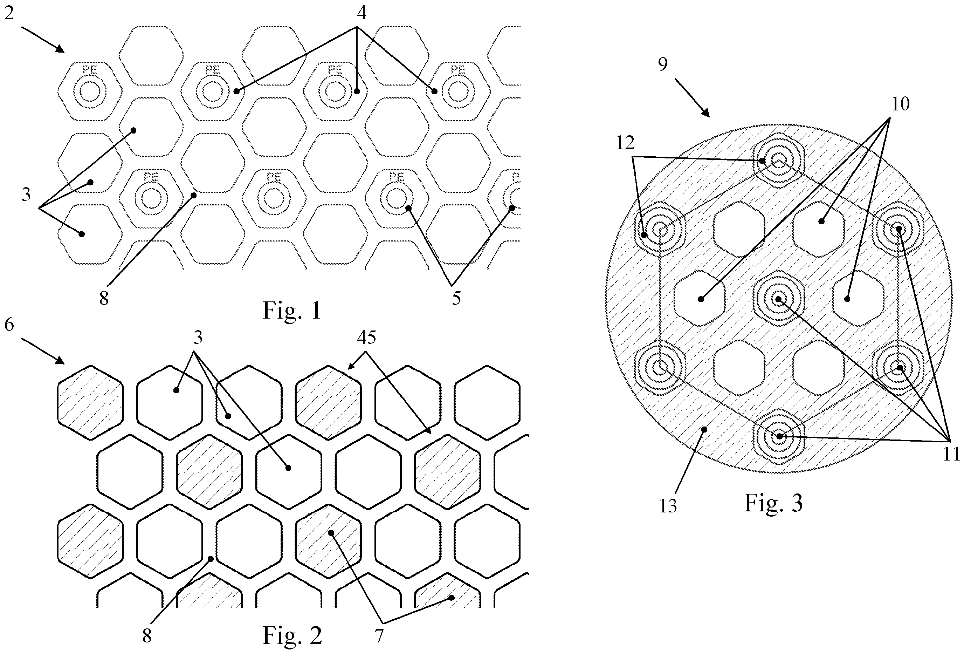

Figur 1 zeigt eine erste Ausführungsvariante eines primären Übertragungselements 2 in einer schematischen Ansicht. Das primäre Übertragungselement 2 umfasst mehrere primäre Kontaktflächen 3 und mehrere primäre PE-Kontaktflächen 4. Die primären Kontaktflächen 3 sind zueinander und zu den primären PE-Kotaktflächen 4 isoliert und strukturiert auf einer primären Oberfläche des primären Übertragungselements angeordnet, wobei die primären Kontaktflächen 3 und die primären PE-Kontaktflächen 4 die gleiche sechseckige Form aufweisen. Die primären Kontaktflächen 3 sind zueinander und zu den primären PE-Kontaktflächen 4 elektrisch isoliert in Kunstharz 8 eingegossen. Es besteht aber auch die Möglichkeit statt Kunstharz 8 jegliche andere Materialien aus zum Beispiel Kunststoff oder Keramik einzusetzen, die elektrisch isolierende Eigenschaften aufweisen. In den primären PE-Kontaktflächen 4 sind erste Teile eines Positionierungsmittels in Form eines Magnetkopplungselements ausgebildet. Die ersten Teile sind durch ferromagnetische Inlays 5 gebildet, welche aus Eisen bzw. aus einer Eisenlegierung bestehen. Die primären PE-Kontaktflächen 4 und die primären Kontaktflächen 3 bestehen aus Kupfer, können aber auch aus Aluminium, Chrom, Nickel, Silber, Gold oder Legierungen mit zumindest einem dieser Metalle gebildet sein.

Figur 2 zeigt eine weitere Ausführungsvariante eines primären Übertragungselements 6 in einer schematischen Ansicht. Das primäre Übertragungselement 6 unterscheidet sich zu dem primären Übertragungselement 2 gemäß Figur 1 darin, dass primären PE-Kontaktflächen 7 mit einer Kappe 45 aus ferromagnetischem Material umhüllt sind. Die Kappen 45 bilden die ersten Teile des Magnetkopplungselements.

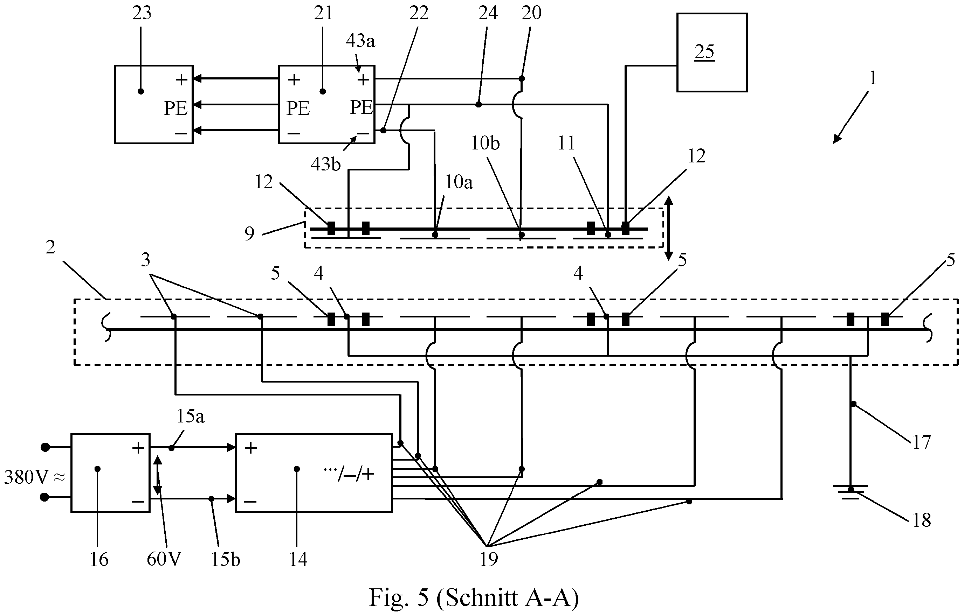

Figur 3 zeigt eine Ausführungsvariante eines sekundären Übertragungselements 9 in einer schematischen Ansicht. Das sekundäre Übertragungselement 9 umfasst mehrere sekundäre Kontaktflächen 10 und mehrere sekundäre PE-Kontaktflächen 11. In den sekundären PE-Kontaktflächen 11 sind zweite Teile eines Positionierungsmittels in Form eines Magnetkopplungselements ausgebildet. Die zweiten Teile sind durch Elektromagnete 12 gebildet, die mittels einer in Figur 5 dargestellten Steuereinheit 25 ansteuerbar sind. Die sekundären Kontaktflächen 10 und die sekundären PE-Kontaktflächen 11 sind zueinander elektrisch isoliert auf dem sekundären Übertragungselement 9 angeordnet. In dieser Ausführungsvariante sind die sekundären Kontaktflächen 10 und die sekundären PE-Kontaktflächen 11 in Kunstharz 13 eingegossen.

Die Struktur der Anordnung der sekundären Kontaktflächen 10 und der sekundären PE-Kontaktflächen 11 entspricht im Wesentlichen der Struktur der Anordnung der primären Kontaktflächen 3 und der primären PE-Kontaktflächen 4 des primären Übertragungselements 2 nach Figur 1 bzw. der Struktur der Anordnung der primären Kontaktflächen 3 und der primären PE-Kontaktflächen 7 des primären Übertragungselements 6 nach Figur 2.

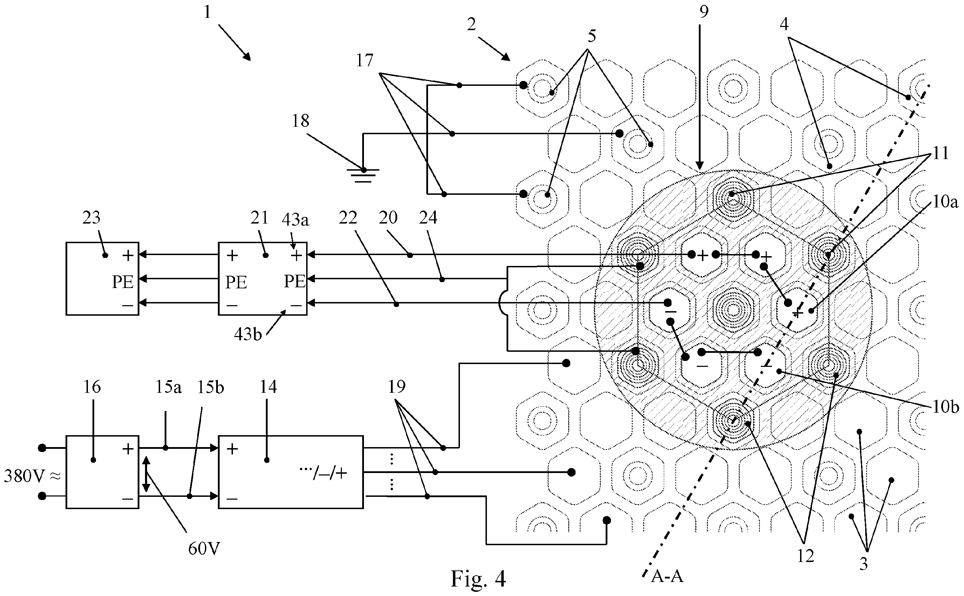

Figur 4 zeigt eine Ausführungsvariante eines erfindungsgemäßen Kontaktierungssystems 1 mit kontaktiertem primären Übertragungselement 2 gemäß Figur 1 und sekundären Übertragungselement 9 gemäß Figur 3 in einer schematischen Ansicht.

Jede primäre Kontaktfläche 3 des primären Übertragungselements 2 ist über erste Verbindungsleitungen 19 über eine Schaltereinheit 14 mit zwei Polen, einem Pluspol 15a und einem Minuspol 15b, des primären Geräts verbunden. Aus Gründen der besseren Übersichtlichkeit sind nur einige wenige der ersten Verbindungsleitungen 19 in Figur 4 dargestellt. Das primäre Übertragungselement 2 ist vorteilhaft in eine Fahrbahn eines Parkplatzes eingelassen. Die Schaltereinheit 14 weist eine Vielzahl von Schaltern auf, wobei jede primäre Kontaktfläche 3 über einen Schalter mit jeweils einem der Pole 15a, 15b verbunden oder potentialfrei geschaltet ist. Die Schalter der Schaltereinheit 14 werden durch in der Schaltereinheit 14 ausgebildete Steuermittel angesteuert. Die einzelnen Schalter in der Schaltereinheit 14 sind durch handelsübliche Relais gebildet und die Steuermittel sind durch einen Mikrocontroller gebildet. Das primäre Gerät ist durch eine Energieversorgungseinheit 16 in Form eines an einem Netz hängenden Trafos und Gleichrichters gebildet, der eine Wechselspannung von 380V des Netzes auf 60V oder mehr Gleichspannung transformiert.

In einer weiteren Ausführungsvariante sind die einzelnen Schalter in der Schaltereinheit 14 durch Leistungsthyristoren oder Leistungstransistoren gebildet.

Die primären PE-Kontaktflächen 4 sind über zweite Verbindungsleitungen 17 mit dem Erdpotential 18 verbunden. In dieser Ausführungsvariante sind die primären PE-Kontaktflächen 4 direkt geerdet. Es besteht aber auch die Möglichkeit, dass die primären PE-Kontaktflächen 4 über das Netz, an das die Energieversorgungseinheit 16 angeschlossen ist, geerdet sind. Aus Gründen der besseren Übersichtlichkeit sind nur einige wenige der zweiten Verbindungsleitungen 17 in Figur 4 dargestellt.

Drei erste sekundäre Kontaktflächen 10a des sekundären Übertragungselements 9 sind über eine dritte Verbindungsleitung 20 mit dem positiven Pol 43a des sekundären Geräts verbunden. Drei zweite sekundäre Kontaktflächen 10b des sekundären Übertragungselements 9 sind über eine vierte Verbindungsleitung 22 mit einem negativen Pol 43b des sekundären Geräts verbunden. Das sekundäre Gerät ist durch eine Ladeschaltung 21 eines Fahrzeugs mit Elektronantrieb gebildet. Die sekundären PE-Kontaktflächen 11 sind über eine fünfte Verbindungsleitung 24 mit einem Erdungskontakt der Ladeschaltung 21 verbunden. Aus Gründen der besseren Übersichtlichkeit sind nur einige wenige der fünften Verbindungsleitungen 24 in Figur 4 dargestellt. An die Ladeschaltung 21 sind eine Energieversorgung des Fahrzeugs gekennzeichnet durch den Block 23 angeschlossen. Die Energieversorgung ist zum Beispiel durch eine Lithiumionen-Batterie gebildet.

In einer weiteren Ausführungsvariante weist das Kontaktierungssystem 1 ein primäres Übertragungselement 6 gemäß Figur 2 auf.

In einer weiteren Ausführungsvariante transformiert die Energieversorgungseinheit 16 die Wechselspannung von 380V auf 200V Gleichspannung.

In einer weiteren Ausführungsvariante ist das primäre Gerät durch einen Sicherungskasten mit mehreren Sicherungen gebildet, wobei die 380V Wechselspannung des Netzes direkt an den Polen 15a und 15b anliegen. Bei dieser Ausführungsvariante weist die Ladeschaltung 21 zusätzlich noch einen Gleichrichter auf, um die Wechselspannung auf Gleichspannung für die Energieversorgung des Fahrzeugs zu transformieren. Vorteilhaft sind bei dieser Ausführungsvariante die Schalter der Schaltereinheit 14 durch Leistungstriacs gebildet.

Figur 5 zeigt die Ausführungsvariante des erfindungsgemäßen Kontaktierungssystems 1 gemäß Figur 4 in einer Schnittansicht entlang der Linie A-A. Im Folgenden wird die Herstellung einer elektrischen Verbindung zwischen den Polen 15a, 15b der Energieversorgungseinheit 16 und den Polen 43a, 43b der Ladeschaltung 21 näher beschrieben. Das sekundäre Übertragungselement 9 ist anhebbar und absenkbar mittels einer aktiv ansteuerbaren Absenkeinheit am Unterboden des Fahrzeugs befestigt, wobei das sekundäre Übertragungselement 9 beweglich an der Absenkeinheit befestigt ist. Das Fahrzeug und die Absenkeinheit sind in Figur 5 aus Gründen der besseren Übersichtlichkeit nicht dargestellt. Eine im Fahrzeug ausgebildete Steuereinheit 25 erkennt, wenn das Fahrzeug über dem primären Übertragungselement 2 abgestellt wurde. Ist dies der Fall, dann aktiviert die Steuereinheit 25 die Elektromagneten 12 und steuert die Absenkeinheit an, das sekundäre Übertragungselement 9 auf das primäre Übertragungselement 2 abzusenken. Durch die aktivierten Elektromagneten 12 und aufgrund der in den primären PE-Kontaktflächen 4 ausgebildeten Inlays 5 wird das primäre Übertragungselement 9 so zum sekundären Übertragungselement 2 ausgerichtet, dass eine jeweilige sekundäre PE-Kontaktfläche 11 eine jeweilige primäre PE-Kontaktfläche 4 flächig berührt und die PE-Kontaktflächen 4, 11 sich zur Gänze überdecken.

Durch die Anzahl der sekundären PE-Kontaktflächen 11 und der primären PE-Kontaktflächen 4 wird das sekundäre Übertragungselement 9 sowohl winkelig als auch translatorisch gegenüber dem primären Übertragungselement 2 durch die Elektromagneten 12 ausgerichtet, sodass jeweils eine der sechs sekundären Kontaktfläche 10a, 10b jeweils eine primäre Kontaktfläche 3 berührt. Da jede sekundäre Kontaktfläche 10a, 10b zur Gänze auf einer primären Kontaktfläche 3 aufliegt ist der Vorteil erhalten, dass sehr hohe Leistungen über die Kontaktflächen übertragen werden können. Über die primären PE-Kontaktflächen 4 und die sekundären PE-Kontaktflächen 11 wird die Ladeschaltung 21 schaltungsfrei geerdet.

Der in den Schaltereinheit 14 ausgebildete Mikrocontroller ermittelt diejenigen primären Kontaktflächen 3, die eine sekundäre Kontaktfläche berühren. Die primären Kontaktflächen 3 sind zu diesem Zeitpunkt noch alle potentialfrei geschaltet. Im weiteren Schritt ermittelt der Mikrocontroller, welche primären Kontaktflächen 3 über die sekundären Kontaktflächen 10a, 10b mit welchem Pol 43a, 43b der Ladeschaltung 21 verbunden sind. Nach der Festlegung der Polung der primären Kontaktflächen 3 wird durch den Mikrocontroller durch Ansteuern der Schaltereinheit 14 eine elektrische Verbindung über ermittelte erste primäre Kontaktflächen 3 und die ersten sekundären Kontaktflächen 10a zwischen dem Pluspol 43a der Ladeschaltung und dem Pluspol 15a der Energieversorgungseinheit 16 hergestellt und eine elektrische Verbindung über ermittelte zweite primäre Kontaktflächen 3 und die zweiten sekundären Kontaktflächen 10b zwischen dem Minuspol 43b der Ladeschaltung 21 und dem Minuspol 15b der Energieversorgungseinheit 16 hergestellt. Infolge ist eine elektrische Verbindung zwischen den Polen 15a, 15b der Energieversorgungseinheit 16 und den Polen 43a, 43b der Ladeschaltung 21 hergestellt. Die restlichen primären Kontaktflächen 3, die keine sekundäre Kontaktfläche 10a, 10b berühren, bleiben potentialfrei.

Ist der Ladevorgang abgeschlossen oder möchte der Fahrer des Fahrzeuges wegfahren steuert die Steuereinheit 25 die Absenkeinheit an, um die Elektromagneten 12 zu deaktivieren und das sekundäre Übertragungselement 9 anzuheben. Bevor das sekundäre Übertragungselement 9 von dem primären Übertragungselement 2 abgehoben wird, wird vom Mikrocontroller die Stromzufuhr zu den primären Kontaktflächen 3 unterbrochen und alle primären Kontaktflächen 3 sind wieder potentialfrei geschalten.

In einer weiteren Ausführungsvariante ist die elektrische Verbindung zwischen den ersten sekundären Kontaktflächen 10a und dem Pluspol 43a der Ladeschaltung 21 unterbrochen und die elektrische Verbindung zwischen den zweiten sekundären Kontaktflächen 10b und dem Minuspol 43b der Ladeschaltung 21 unterbrochen bevor die Absenkeinheit hochgefahren wird. Erst bei kontaktiertem primären Übertragungselement 2 und sekundärem Übertragungselement 9 wird die elektrische Verbindung zwischen der Ladeschaltung 21 und den sekundären Kontaktflächen 10a, 10b wieder hergestellt. Hierdurch wird eine Elektrisierung an den Polen der sekundären Kontaktflächen 10a, 10b vermieden und es wird vermieden, dass die Pole 43a, 43b der Ladeschaltung 21 während der Fahrt bzw. während der Kontaktierung kurzgeschlossen werden.

In einer weiteren Ausführungsvariante sind die primären Kontaktflächen 3 des primären Übertragungselements 2 alternierend über die ersten Verbindungsleitungen 19 über die Schaltereinheit 14 mit dem Pluspol 15a und dem Minuspol 15b der Energieversorgungseinheit 16 verbunden. Im Schnitt A-A ist somit eine der beiden zwischen zwei primären PE-Kontaktflächen 4 liegenden primären Kontaktflächen 3 über einen Schalter nur mit dem Pluspol 15a der Energieversorgungseinheit 16 verbunden und der andere der beiden zwischen zwei primären PE-Kontaktflächen 4 liegenden primären Kontaktflächen 3 über einen Schalter nur mit dem Minuspol 15b der Energieversorgungseinheit 16 verbunden. Ferner muss die sekundäre Kontaktfläche 10a oder 10b mindestens so groß sein, dass die sekundäre Kontaktfläche 10a oder 10b oder mehrere gleich gepolte sekundäre Kontaktflächen 10a oder 10b zumindest zwei primäre Kontaktflächen 3 bei kontaktiertem primären Übertragungselement 2 und sekundären Übertragungselement 9 überdeckt/überdecken. Hierdurch ist der Vorteil erhalten, dass nicht sämtliche primäre Kontaktflächen 3, die eine sekundäre Kontaktfläche 4 berühren zur Herstellung einer Verbindung zwischen dem Pluspol 15a der Energieversorgungseinheit 16 und dem Pluspol 43a der Ladeschaltung 21 und dem Minuspol 15b der Energieversorgungseinheit 16 und dem Minuspol 43b der Ladeschaltung 21 geschalten werden müssen.

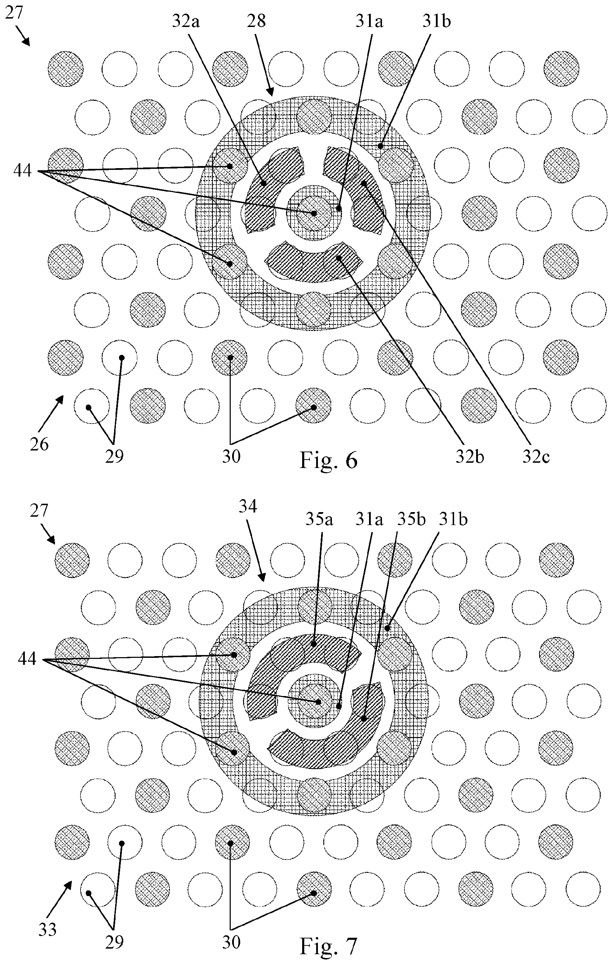

Figur 6 zeigt eine weitere Ausführungsvariante eines erfindungsgemäßen Kontaktierungssystems 26 mit kontaktiertem primären Übertragungselement 27 und sekundären Übertragungselement 28 in einer schematischen Ansicht. Im Unterschied zu dem primären Übertragungselement 6 gemäß Figur 2 sind bei dem primären Übertragungselement 27 primäre Kontaktflächen 29 und primäre PE-Kontaktflächen 30 rund ausgebildet. Die primären PE-Kontaktflächen 30 sind auch mit einer ferromagnetischen Kappe umhüllt. Die Kappen bilden jeweils ein erstes Teil eines Positionierungsmittels gebildet durch ein Magnetkopplungselement.

In einer weiteren Ausführungsvariante bestehen die primären PE-Kontaktflächen 30 zur Gänze aus einem ferromagnetischen Material.

Das sekundäre Übertragungselement 28 weist zwei sekundäre PE-Kontaktflächen und drei sekundäre Kontaktflächen auf, wobei eine erste sekundäre PE-Kontaktfläche 31a rund ausgebildet ist und eine zweite sekundäre PE-Kontaktfläche 31b ringförmig ausgebildet ist. Hierdurch ist der Vorteil erhalten, dass bei kontaktiertem ersten Übertragungselement 27 und zweiten Übertragungselement 28 die sekundären Kontaktflächen komplett von der zweiten sekundären PE-Kontaktfläche 31b umschlossen sind und somit von außen nicht zugänglich sind. Die sekundären Kontaktflächen sind mit drei unterschiedlichen Polen mit dem sekundären Gerät verbunden, wobei eine erste sekundäre Kontaktfläche 32a mit einem Minuspol des sekundären Geräts verbunden ist, eine zweite sekundäre Kontaktfläche 32b mit einem Pluspol des sekundären Geräts verbunden ist und eine dritte sekundäre Kontaktfläche 32c mit einem INPUT/OUTPUT Pol zum Datenaustausch des sekundären Geräts verbunden ist. Das primäre Gerät umfasst einen Pluspol, einen Minuspol und einen INPUT/OUPUT Pol, wobei die einzelnen Pole jeweils über Schalter mit den primären Kontaktflächen 29 verbunden sind. Infolge kann das Kontaktierungssystem 26 auch zum Datenaustausch zwischen primären und sekundären Gerät herangezogen werden. Der Übersichtlichkeit halber wurde auf die Darstellung von Elektronik und die Darstellung des primären Geräts und des sekundären Geräts in Figur 6 verzichtet. Die Elektronik ist aber im Wesentlichen gleich zur Elektronik gezeigt in Figur 4 oder Figur 5.

Bei der Ausführungsvariante dargestellt in Figur 6 sind in der ersten sekundären PE-Kontaktfläche 31a ein zweiter Teil des Magnetkopplungselements in Form eines Elektromagneten 44 und in der zweiten sekundären PE-Kontaktfläche 31b sechs zweite Teile in Form von Elektromagneten 44 ausgebildet. Die Elektromagnete 44 sind so in den sekundären PE-Kontaktflächen 31a, 31b ausgebildet, dass sie unter der Oberfläche der sekundären PE-Kontaktflächen 31a und 31b verborgen und von außen unsichtbar sind. Die Elektromagnete 44, die in der zweiten sekundären PE-Kontaktfläche 31b ausgebildet sind, sind so in der zweiten sekundären PE- Kontaktfläche 31b angeordnet, dass bei kontaktiertem primären Übertragungselement 27 und sekundären Übertragungselement 28 jede sekundäre Kontaktfläche 31a, 31b und 31c zwei primäre Kontaktflächen 29 überdeckt. Somit wird das sekundäre Übertragungselement 28 bei Kontaktierung des sekundären Übertragungselements 28 mit dem primären Übertragungselement 27 immer sowohl winkelig, als auch translatorisch gegenüber dem primären Übertragungselement 27 ausgerichtet.

In einer weiteren Ausführungsvariante umfasst das primäre Geräte drei Pole an denen ein Drehstrom anliegt, wobei die einzelnen Pole jeweils über Schalter mit dem primären Kontaktflächen 29 verbunden sind. Bei dieser Ausführungsvariante ist die erste sekundäre Kontaktfläche 32a einem ersten Pol des sekundären Geräts zur Stromübertragung, die zweite sekundäre Kontaktfläche 32b einem zweiten Pol des sekundären Geräts zur Stromübertragung und die dritte sekundären Kontaktfläche 32c einem dritten Pol des sekundären Geräts zur Stromübertragung zugeordnet. Infolge kann bei dieser Anordnung Dreiphasenwechselstrom über das Kontaktierungssystem vom primären zum sekundären Gerät übertragen werden. Dies ist besonders vorteilhaft da so direkt der Wechselstrom eines Versorgungsnetzes übertragen werden kann.

Figur 7 zeigt eine weitere Ausführungsvariante eines erfindungsgemäßen Kontaktierungssystems 33 mit kontaktiertem primären Übertragungselement 27 und sekundären Übertragungselement 34 in einer schematischen Ansicht. Das sekundäre Übertragungselement 34 unterscheidet sich von dem sekundären Übertragungselement 28 des Kontaktierungssystems 26 gemäß Figur 6 darin, dass das sekundäre Übertragungselement 34 nur zwei sekundäre Kontaktflächen 35a, 35b aufweist. Bei kontaktiertem primären Übertragungselement 27 und sekundären Übertragungselement 34 überdeckt jede sekundäre Kontaktfläche 35a, 35b drei primäre Kontaktflächen 29. Hierdurch ist der Vorteil erhalten, dass eine größere Leistung über das primäre Übertragungselement 27 und das sekundäre Übertragungselement 34 übertragen werden kann. Der Übersichtlichkeit halber wurde auf die Darstellung von Elektronik in Figur 7 verzichtet. Die Elektronik ist aber im Wesentlichen gleich zur Elektronik gezeigt in Figur 4 oder Figur 5.

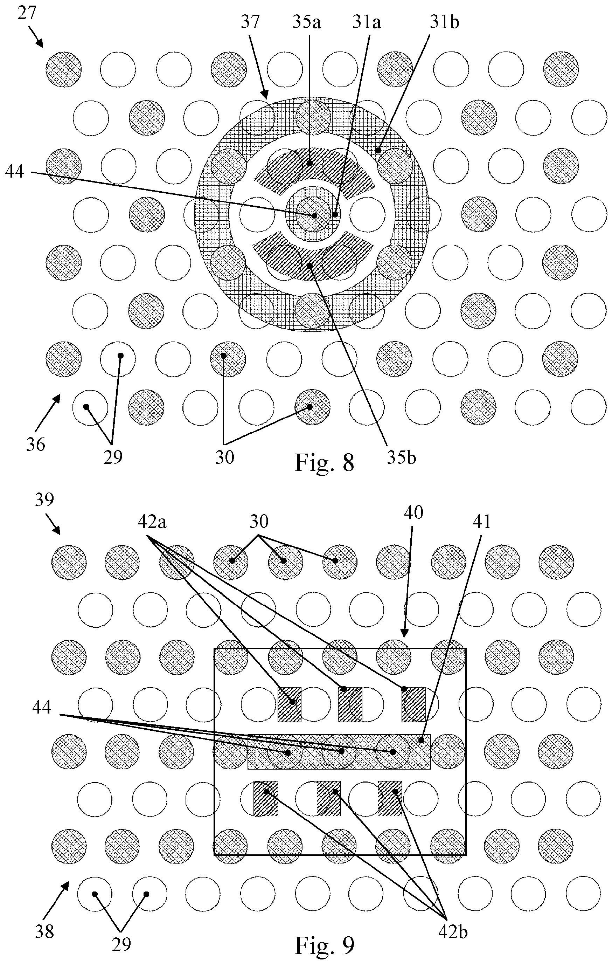

Figur 8 zeigt eine weitere Ausführungsvariante eines erfindungsgemäßen Kontaktierungssystems 36 mit kontaktiertem primären Übertragungselement 27 und sekundären Übertragungselement 37 in einer schematischen Ansicht. Das sekundäre Übertragungselement 37 unterscheidet sich von dem sekundären Übertragungselement 34 des Kontaktierungssystems 33 gemäß Figur 7 darin, dass die sekundären Kontaktflächen 35a und 35b so zueinander beabstandet sind, dass bei kontaktiertem primären Übertragungselement 27 und sekundären Übertragungselement 37 und bei Kontakt zwischen der ersten sekundären PE-Kontaktfläche 31a und einer primären PE-Kontaktfläche 30 eine winkelige Ausrichtung des sekundären Übertragungselements 37 zum primären Übertragungselement 27 vermieden werden kann. Hierdurch ist der Vorteil erhalten, dass auf Elektromagneten in der zweiten sekundären PE-Kontaktfläche 31b verzichtet werden kann, wodurch sich der fertigungstechnische Aufwand bei der Herstellung des sekundären Übertragungselements 37 verringert.

Figur 9 zeigt eine weitere Ausführungsvariante eines erfindungsgemäßen Kontaktierungssystems 38 mit kontaktiertem primären Übertragungselement 39 und sekundären Übertragungselement 40 in einer schematischen Ansicht. Das primäre Übertragungselement 39 unterscheidet sich von dem primären Übertragungselement 27 des Kontaktierungssystems 36 gemäß Figur 8 darin, dass die primären Kontaktflächen 29 und die primären PE-Kontaktflächen 30 alternierend in Reihen strukturiert an dem primären Übertragungselement 39 angeordnet sind. Das sekundäre Übertragungselement 40 ist im Wesentlichen recheckig ausgebildet und weist eine sekundäre PE-Kontaktfläche 41, drei erste sekundäre Kontaktflächen 42a und drei zweite sekundäre Kontaktfläche 42b auf, wobei die ersten sekundären Kontaktflächen 42a mit einem ersten Pol eines sekundären Geräts verbunden sind und die zweiten sekundären Kontaktflächen 42b mit einem zweiten Pol des sekundären Geräts verbunden sind. Der Übersichtlichkeit halber ist das sekundäre Gerät in Figur 9 nicht dargestellt. In der sekundären PE-Kontaktfläche 42 sind zweite Teile eines Positionierungsmittels gebildet durch ein Magnetkopplungselements ausgebildet. Die zweiten Teile sind durch Elektromagnete 44 gebildet. Durch die Elektromagnete 44 wird bei Kontaktierung des primären Übertragungselements 39 und des sekundären Übertragungselements 40 das sekundäre Übertragungselement 40 sowohl translatorisch, als auch winkelig gegenüber dem primären Übertragungselement 39 ausgerichtet.

Es kann erwähnt werden, dass auch Gleichspannungen von 80, 100 oder 400 Volt, sowie Wechselspannungen in ähnlichen Spannungsbereichen durch das primäre Gerät zur Verfügungen gestellt werden können.. Ferner ist die Anzahl der Pole in den Ausführungsbeispielen als nicht einschränkend anzusehen. Es besteht zum Beispiel die Möglichkeit Dreiphasenwechselstrom mit Nullleiter zu übertragen. Darüber hinaus könnten über weitere sekundäre Kontaktflächen und Pole weitere Wechselspannungen mit unterschiedlicher Spannungsamplitude oder Frequenz übertragen werden. Ebenso wäre die Übertragung von Daten bezüglich beispielsweise des Ladezustandes des Fahrzeugs über weitere sekundäre Kontaktflächen und Pole möglich. Auch könnte das primäre Übertragungsmittel am Fahrzeug und das sekundäre Übertragungsmittel in der Fahrbahn eines Parkplatzes vorgesehen sein.

In einer weiteren Ausführungsvariante erfolgt eine Stromübertragung vom sekundären zum primären Gerät über das Kontaktierungssystem.

Unter dem Begriff Fahrzeug wird vor allem ein Personenkraftwagen, ein Lastkraftwagen, ein Motorrad, ein Bus, ein Shuttle oder eine Drohne gesehen.

## Patentansprüche

1. Kontaktierungssystem (1; 26; 33; 36; 38) zum Herstellen einer elektrischen Verbindung zwischen einem primären Gerät und einem sekundären Gerät mit zumindest zwei zueinander elektrisch isolierten Polen (15a, 15b, 43a, 43b), mit:
einem primären Übertragungselement (2; 6; 27; 39), das eine Mehrzahl an strukturiert angeordneten gegeneinander elektrisch isolierten primären Kontaktflächen (3; 29) aufweist, wobei jede primäre Kontaktfläche (3; 29) über einen jeweiligen Schalter (14) des Kontaktierungssystems mit zumindest einem der Pole (15a, 15b) des primären Geräts verbindbar ist, und mit
einem sekundären Übertragungselement (9; 28; 34; 37; 40), das eine Mehrzahl an gegeneinander elektrisch isolierten sekundären Kontaktflächen (10; 10a; 10b; 32a; 32b; 32c; 35a; 35b; 42a; 42b) aufweist, wobei jeder der Pole (43a; 43b) des sekundären Geräts mit zumindest einer der sekundären Kontaktflächen (10; 10a; 10b; 32a; 32b; 32c; 35a; 35b; 42a; 42b) elektrisch verbindbar ist, wobei das primäre Übertragungselement (2; 6; 27; 39) zum Kontaktieren mit dem sekundären Übertragungselement (9; 28; 34; 37; 40) ausgebildet ist und wobei bei kontaktiertem primären Übertragungselement (2; 6; 27; 39) und sekundären Übertragungselement (9; 28; 34; 37; 40) die sekundären Kontaktflächen (10; 10a; 10b; 32a; 32b; 32c; 35a; 35b; 42a; 42b) zumindest einen Teil der primären Kontaktflächen (2; 6; 27; 39) berühren, und mit
Steuermitteln, die bei kontaktiertem primären Übertragungselement (2; 6; 27; 39) und sekundären Übertragungselement (9; 28; 34; 37; 40) zum Ermitteln primärer Kontaktflächen (3; 29) ausgebildet sind, die eine sekundäre Kontaktfläche (10; 10a; 10b; 32a; 32b; 32c; 35a; 35b; 42a; 42b) berühren, und die zum Herstellen einer elektrischen Verbindung, durch Ansteuern der jeweiligen Schalter (14) über die ermittelten primären Kontaktflächen (3; 29) und die sekundären Kontaktflächen (10; 10a; 10b; 32a; 32b; 32c; 35a; 35b; 42a; 42b), zwischen den einzelnen Polen (15a, 15b) des primären Geräts und den einzelnen Polen (43a, 43b) des sekundären Geräts ausgebildet sind,
**dadurch gekennzeichnet, dass**
an dem primären Übertragungselement (2; 6; 27; 39) mehrere primäre PE-Kontaktflächen (4; 7; 30) ausgebildet sind, die strukturiert zwischen den primären Kontaktflächen (3; 29) zu den primären Kontaktflächen (3; 29) elektrisch isoliert auf dem primären Übertragungselement (2; 6; 27; 39) angeordnet sind, dass
an dem sekundären Übertragungselement (9; 28; 34; 37; 40) zumindest eine sekundäre PE-Kontaktfläche (11; 31a, 31b; 41) ausgebildet ist, die zu den sekundären Kontaktflächen (10; 10a; 10b; 32a; 32b; 32c; 35a; 35b; 42a; 42b) elektrisch isoliert ist, und dass
das Kontaktierungssystem Positionierungsmittel (5, 12, 44, 45) aufweist, welche Positionierungsmittel bei Kontaktierung des primären Übertragungselements (2; 6; 27; 39) mit dem sekundären Übertragungselement (9; 28; 34; 37; 40) das sekundäre Übertragungselement (9; 28; 34; 37; 40) und das primäre Übertragungselement (2; 6; 27; 39) so gegeneinander ausrichten, dass die zumindest eine sekundäre PE-Kontaktfläche (11; 31a, 31b; 41) zumindest eine primäre PE-Kontaktfläche (4; 7; 30) berührt.

2. Kontaktierungssystem (1; 26; 33; 36; 38) nach Anspruch 1, **dadurch gekennzeichnet, dass** bei kontaktiertem primären Übertragungselement (2; 6; 27; 39) und sekundären Übertragungselement (9; 28; 34; 37; 40) über zumindest eine primäre PE-Kontaktfläche (4; 7; 30) und die zumindest eine sekundäre PE-Kontaktfläche (11; 31a, 31b; 41) eine schaltungsfreie Verbindung zwischen dem primären Gerät und dem sekundären Gerät hergestellt ist.

3. Kontaktierungssystem (1; 26; 33; 36; 38) nach Anspruch 2, **dadurch gekennzeichnet, dass** die primären PE-Kontaktflächen (4; 7; 30) fest mit dem Erdpotential (18) verbunden sind oder dass die zumindest eine sekundäre PE-Kontaktfläche (11; 31a, 31b; 41) fest mit dem Erdpotential (18) verbunden ist.

4. Kontaktierungssystem (1; 26; 33; 36; 38) nach einem der Ansprüche 1 bis 3, **dadurch gekennzeichnet, dass** die Positionierungsmittel durch ein Magnetkopplungselement gebildet sind, welches Magnetkopplungselement zumindest einen ersten Teil und zumindest einen zweiten Teil aufweist, wobei der zumindest eine erste Teil in dem primären Übertragungselement (2; 6; 27; 39) ausgebildet ist und der zumindest eine zweite Teil in dem sekundären Übertragungselement (9; 28; 34; 37; 40) ausgebildet ist.

5. Kontaktierungssystem (1; 26; 33; 36; 38) nach Anspruch 4, **dadurch gekennzeichnet, dass** der zumindest eine erste Teil des Magnetkopplungselements durch einen Elektromagneten (12; 44) oder Permanentmagneten gebildet ist und der zumindest eine zweite Teil durch ein ferromagnetisches Element (5; 45), einen Elektromagneten (12; 44) oder einen Permanentmagneten gebildet ist, oder dass der zumindest eine erste Teil des Magnetkopplungselements durch ein ferromagnetisches Element (5; 45) gebildet ist und der zumindest eine zweite Teil durch einen Elektromagneten (12; 44) oder einen Permanentmagneten gebildet ist.

6. Kontaktierungssystem (1; 26; 33; 36; 38) nach Anspruch 4 oder 5, **dadurch gekennzeichnet, dass** in jeder primären PE-Kontaktfläche (4; 7; 30) ein erstes Teil des zumindest einen Magnetkopplungselements ausgebildet ist und dass in der zumindest einen sekundären PE-Kontaktfläche (11; 31a, 31b; 41) ein zweites Teil ausgebildet ist.

7. Kontaktierungssystem nach einem der Ansprüche 1 bis 3, **dadurch gekennzeichnet, dass** das primäre Übertragungselement eine primäre Oberfläche aufweist und dass das sekundäre Übertragungselement eine sekundäre Oberfläche aufweist, wobei die Positionierungsmittel durch eine erste räumliche Struktur der primären Oberfläche und eine zweite räumliche Struktur der sekundären Oberfläche gebildet sind.

8. Kontaktierungssystem nach Anspruch 7, **dadurch gekennzeichnet, dass** die erste räumliche Struktur der primären Oberfläche die Negativform der räumlichen Struktur der sekundären Oberfläche abbildet.

9. Kontaktierungssystem nach einem der Ansprüche 1 bis 3, **dadurch gekennzeichnet, dass** die Positionierungsmittel durch eine Verfahreinheit, welche Verfahreinheit auf das primäre und/oder das sekundäre Übertragungselement wirkt und zum Kontaktieren des primären Übertragungselements mit dem sekundären Übertragungselement ausgebildet ist, und zumindest einen Sensor gebildet sind, welcher zumindest eine Sensor in dem sekundären Übertragungselement und/oder dem primären Übertragungselement ausgebildet ist, wobei bei Kontaktierung des primären Übertragungselements mit dem sekundären Übertragungselement der zumindest eine Sensor eine Relativposition zwischen primärem Übertragungselement und sekundärem Übertragungselement erfasst und wobei die Verfahreinheit so entsprechend der erfassten Relativposition ansteuerbar ist, dass die zumindest eine sekundäre PE-Kontaktfläche zumindest eine primäre PE-Kontaktfläche berührt.

10. Kontaktierungssystem (1; 26; 33; 36; 38) nach einem der Ansprüche 1 bis 9, **dadurch gekennzeichnet, dass** das primäre Übertragungselement (2; 6; 27; 39) für eine Fahrbahn eines Parkplatzes, eines Kreuzungsbereichs oder einer Garage ausgebildet ist und dass das primäre Gerät durch eine Energieversorgungseinheit (16) gebildet ist und/oder dass das sekundäre Übertragungselement (9; 28; 34; 37; 40) absenkbar und anhebbar an einem Fahrzeug, insbesondere einem Fahrzeug mit Elektroantrieb, ausgebildet ist und dass das sekundäre Gerät durch eine Ladeschaltung (21) des Fahrzeuges gebildet ist..

11. Kontaktierungssystem (1; 26; 33; 36; 38) nach einem der Ansprüche 1 bis 10, **dadurch gekennzeichnet, dass** die primären PE-Kontaktflächen (4; 7; 30) und die zumindest eine sekundäre PE-Kontaktfläche (11; 31a, 31b; 41) rund oder polygonal ausgebildet sind, wobei die Positionierungsmittel bei Kontaktierung des primären Übertragungselements (2; 6; 27; 39) und des sekundären Übertragungselements (9; 28; 34; 37; 40) das sekundäre Übertragungselement (9; 28; 34; 37; 40) und das primäre Übertragungselement (2; 6; 27; 39) so gegeneinander ausrichten, dass die zumindest eine sekundäre PE-Kontaktfläche (11; 31a, 31b; 41) zumindest eine primäre PE-Kontaktfläche (4; 7; 30) zur Gänze überdeckt.

12. Kontaktierungssystem (1; 26; 33; 36; 38) nach Anspruch 11, **dadurch gekennzeichnet, dass** die primären Kontaktflächen (3; 29) des primären Übertragungselements (2; 6; 27; 39) so gegenüber den sekundären Kontaktflächen (10; 10a; 10b; 32a; 32b; 32c; 35a; 35b; 42a; 42b) des sekundären Übertragungselements (9; 28; 34; 37; 40) angeordnet sind, dass bei Berührung der zumindest einen sekundären PE-Kontaktfläche (11; 31a, 31b; 41) mit zumindest einer primären PE-Kontaktfläche (4; 7; 30) jede sekundäre Kontaktfläche (10; 10a; 10b; 32a; 32b; 32c; 35a; 35b; 42a; 42b) zumindest eine primäre Kontaktfläche (3; 29) zur Gänze überdeckt.

13. Kontaktierungssystem (1; 26; 33; 36; 38) nach einem der Ansprüche 1 bis 12, **dadurch gekennzeichnet, dass** die Positionierungsmittel bei Kontaktierung des primären Übertragungselements (2; 6; 27; 39) mit dem sekundären Übertragungselement (9; 28; 34; 37; 40) das sekundäre Übertragungselement (9; 28; 34; 37; 40) winklig und/oder translatorisch gegenüber dem primären Übertragungselement (2; 6; 27; 39) ausrichten.

14. Kontaktierungssystem (26; 33; 36; 38) nach einem der Ansprüche 1 bis 13, **dadurch gekennzeichnet, dass** die zumindest eine sekundäre PE-Kontaktfläche (31a, 31b; 41) auf dem sekundären Übertragungselement (28; 34; 37; 40) die sekundären Kontaktflächen (32a; 32b; 32c; 35a; 35b; 42a; 42b) umgebend angeordnet ist, wobei die zumindest eine sekundäre PE-Kontaktfläche (31a, 31b; 41) insbesondere ringförmig ausgebildet ist.

15. Kontaktierungssystem (1; 26; 33; 36; 38) nach einem der Ansprüche 1 bis 14, **dadurch gekennzeichnet, dass** an den zumindest zwei Polen (15a; 15b) des primären Geräts und/oder an den zumindest zwei Polen (43a; 43b) des sekundären Geräts eine Wechselspannung anliegt.

16. Kontaktierungssystem (26) nach einem der Ansprüche 1 bis 15, **dadurch gekennzeichnet, dass** zumindest ein Pol des sekundären Geräts und ein Pol des primären Geräts zum Datenaustausch zwischen primärem Gerät und sekundärem Gerät ausgebildet ist.

## Claims

1. Contacting system (1; 26; 33; 36; 38) for establishing an electrical connection between a primary device and a secondary device with at least two terminals (15a, 15b, 43a, 43b) electrically insulated from each other, with:
a primary transmission element (2; 6; 27; 39) which has a plurality of primary contact surfaces (3; 29) arranged in a structured manner, electrically insulated from each other, wherein each primary contact surface (3; 29) is adapted to be connected to at least one of the terminals (15a, 15b) of the primary device via a respective switch (14) of the contacting system, and with
a secondary transmission element (9; 28; 34; 37; 40) which has a plurality of secondary contact surfaces (10; 10a; 10b; 32a; 32b; 32c; 35a; 35b; 42a; 42b) electrically insulated from each other, wherein each of the terminals (43a; 43b) of the secondary device is adapted to be electrically connected to at least one of the secondary contact surfaces (10; 10a; 10b; 32a; 32b; 32c; 35a; 35b; 42a; 42b), wherein the primary transmission element (2; 6; 27; 39) is formed for contacting with the secondary transmission element (9; 28; 34; 37; 40) and wherein, when primary transmission element (2; 6; 27; 39) and secondary transmission element (9; 28; 34; 37; 40) are contacted, the secondary contact surfaces (10; 10a; 10b; 32a; 32b; 32c; 35a; 35b; 42a; 42b) are in contact with at least a part of the primary contact surfaces (2; 6; 27; 39), and with
control means which, when primary transmission element (2; 6; 27; 39) and secondary transmission element (9; 28; 34; 37; 40) are contacted, are designed to determine primary contact surfaces (3; 29) which are in contact with a secondary contact surface (10; 10a; 10b; 32a; 32b; 32c; 35a; 35b; 42a; 42b), and which are designed to establish an electrical connection between the individual terminals (15a, 15b) of the primary device and the individual terminals (43a, 43b) of the secondary device via the determined primary contact surfaces (3; 29) and the secondary contact surfaces (10; 10a; 10b; 32a; 32b; 32c; 35a; 35b; 42a; 42b) by actuating the respective switches (14),
**characterized in that**
on the primary transmission element (2; 6; 27; 39), several primary PE contact surfaces (4; 7; 30) are formed, which are arranged on the primary transmission element (2; 6; 27; 39) between the primary contact surfaces (3; 29) in a structured manner electrically insulated from the primary contact surfaces (3; 29), **in that**
on the secondary transmission element (9; 28; 34; 37; 40), at least one secondary PE contact surface (11; 31a, 31b; 41) is formed, which is electrically insulated from the secondary contact surfaces (10; 10a; 10b; 32a; 32b; 32c; 35a; 35b; 42a; 42b), and **in that**
the contacting system has positioning means (5, 12, 44, 45), which positioning means, during contacting of the primary transmission element (2; 6; 27; 39) with the secondary transmission element (9; 28; 34; 37; 40), align the secondary transmission element (9; 28; 34; 37; 40) and the primary transmission element (2; 6; 27; 39) with respect to each other such that the at least one secondary PE contact surface (11; 31a, 31b; 41) is in contact with at least one primary PE contact surface (4; 7; 30).

2. Contacting system (1; 26; 33; 36; 38) according to claim 1, **characterized in that**, when primary transmission element (2; 6; 27; 39) and secondary transmission element (9; 28; 34; 37; 40) are contacted, a switch-free connection is established between the primary device and the secondary device via at least one primary PE contact surface (4; 7; 30) and the at least one secondary PE contact surface (11; 31a, 31b; 41).

3. Contacting system (1; 26; 33; 36; 38) according to claim 2, **characterized in that** the primary PE contact surfaces (4; 7; 30) are permanently connected to the earth potential (18) or **in that** the at least one secondary PE contact surface (11; 31a, 31b; 41) is permanently connected to the earth potential (18).

4. Contacting system (1; 26; 33; 36; 38) according to one of claims 1 to 3, **characterized in that** the positioning means are formed by a magnetic coupling element, which magnetic coupling element has at least one first part and at least one second part, wherein the at least one first part is formed in the primary transmission element (2; 6; 27; 39) and the at least one second part is formed in the secondary transmission element (9; 28; 34; 37; 40).

5. Contacting system (1; 26; 33; 36; 38) according to claim 4, **characterized in that** the at least one first part of the magnetic coupling element is formed by an electromagnet (12; 44) or permanent magnet and the at least one second part is formed by a ferromagnetic element (5; 45), an electromagnet (12; 44) or a permanent magnet, or **in that** the at least one first part of the magnetic coupling element is formed by a ferromagnetic element (5; 45) and the at least one second part is formed by an electromagnet (12; 44) or a permanent magnet.

6. Contacting system (1; 26; 33; 36; 38) according to claim 4 or 5, **characterized in that** a first part of the at least one magnetic coupling element is formed in each primary PE contact surface (4; 7; 30), and **in that** a second part is formed in the at least one secondary PE contact surface (11; 31a, 31b; 41).

7. Contacting system according to one of claims 1 to 3, **characterized in that** the primary transmission element has a primary surface and **in that** the secondary transmission element has a secondary surface, wherein the positioning means are formed by a first spatial structure of the primary surface and a second spatial structure of the secondary surface.

8. Contacting system according to claim 7, **characterized in that** the first spatial structure of the primary surface represents the negative form of the spatial structure of the secondary surface.

9. Contacting system according to one of claims 1 to 3, **characterized in that** the positioning means are formed by a displacement unit, which displacement unit acts on the primary and/or the secondary transmission element and is formed for contacting the primary transmission element with the secondary transmission element, and formed by at least one sensor, which at least one sensor is formed in the secondary transmission element and/or the primary transmission element, wherein, during contacting of the primary transmission element with the secondary transmission element, the at least one sensor detects a relative position between primary transmission element and secondary transmission element and wherein the displacement unit is actuatable in accordance with the detected relative position such that the at least one secondary PE contact surface makes contact with at least one primary PE contact surface.

10. Contacting system (1; 26; 33; 36; 38) according to one of claims 1 to 9, **characterized in that** the primary transmission element (2; 6; 27; 39) is formed for a road surface of a parking space, an intersection area or a garage and **in that** the primary device is formed by a power supply unit (16) and/or **in that** the secondary transmission element (9; 28; 34; 37; 40) is formed to be lowered and lifted on a vehicle, in particular a vehicle with an electric drive, and **in that** the secondary device is formed by a charging circuitry (21) of the vehicle.

11. Contacting system (1; 26; 33; 36; 38) according to one of claims 1 to 10, **characterized in that** the primary PE contact surfaces (4; 7; 30) and the at least one secondary PE contact surface (11; 31a, 31b; 41) are formed round or polygonal, wherein the positioning means, during contacting of the primary transmission element (2; 6; 27; 39) and of the secondary transmission element (9; 28; 34; 37; 40), align the secondary transmission element (9; 28; 34; 37; 40) and the primary transmission element (2; 6; 27; 39) with respect to each other such that the at least one secondary PE contact surface (11; 31a, 31b; 41) entirely covers at least one primary PE contact surface (4; 7; 30).

12. Contacting system (1; 26; 33; 36; 38) according to claim 11, **characterized in that** the primary contact surfaces (3; 29) of the primary transmission element (2; 6; 27; 39) are arranged opposite the secondary contact surfaces (10; 10a; 10b; 32a; 32b; 32c; 35a; 35b; 42a; 42b) of the secondary transmission element (9; 28; 34; 37; 40) such that, when the at least one secondary PE contact surface (11; 31a, 31b; 41) is in contact with at least one primary PE contact surface (4; 7; 30), each secondary contact surface (10; 10a; 10b; 32a; 32b; 32c; 35a; 35b; 42a; 42b) entirely covers at least one primary contact surface (3; 29).

13. Contacting system (1; 26; 33; 36; 38) according to one of claims 1 to 12, **characterized in that** the positioning means, during contacting of the primary transmission element (2; 6; 27; 39) with the secondary transmission element (9; 28; 34; 37; 40), align the secondary transmission element (9; 28; 34; 37; 40) angularly and/or translationally with respect to the primary transmission element (2; 6; 27; 39).

14. Contacting system (26; 33; 36; 38) according to one of claims 1 to 13, **characterized in that** the at least one secondary PE contact surface (31a, 31b; 41) is arranged on the secondary transmission element (28; 34; 37; 40) surrounding the secondary contact surfaces (32a; 32b; 32c; 35a; 35b; 42a; 42b), wherein the at least one secondary PE contact surface (31a, 31b; 41) is formed in particular ring-shaped.

15. Contacting system (1; 26; 33; 36; 38) according to one of claims 1 to 14, **characterized in that** an alternating voltage is applied to the at least two terminals (15a; 15b) of the primary device and/or to the at least two terminals (43a; 43b) of the secondary device.

16. Contacting system (26) according to one of claims 1 to 15, **characterized in that** at least one terminal of the secondary device and one terminal of the primary device are formed to exchange data between primary device and secondary device.

## Revendications

1. Système de mise en contact (1; 26; 33; 36; 38) pour l'établissement d'une liaison électrique entre un appareil primaire et un appareil secondaire présentant au moins deux pôles électriquement isolés l'un de l'autre (15a, 15b, 43, 43b), comprenant :
un élément de transmission primaire (2 ; 6 ; 27 ; 39) qui présente une pluralité de surfaces de contact primaires (3 ; 29) qui sont agencées de manière structurée et qui sont électriquement isolées les unes des autres, chaque surface de contact primaire (3 ; 29) étant apte à être reliée à au moins l'un des pôles (15a, 15b) de l'appareil primaire par un commutateur (14) respectif du système de mise en contact, et comprenant
un élément de transmission secondaire (9 ; 28 ; 34 ; 37 ; 40) qui présente une pluralité de surfaces de contact secondaires (10 ; 10a ; 10b ; 32a ; 32b ; 32c ; 35a ; 35b ; 42a ; 42b) qui sont électriquement isolées les unes des autres, chacun des pôles (43a ; 43b) de l'appareil secondaire étant apte à être relié électriquement à au moins l'une des surfaces de contact secondaires (10 ; 10a ; 10b ; 32a ; 32b ; 32c ; 35a ; 35b ; 42a ; 42b), l'élément de transmission primaire (2 ; 6 ; 27 ; 39) étant réalisé pour la mise en contact avec l'élément de transmission secondaire (9 ; 28 ; 34 ; 37 ; 40), et les surfaces de contact secondaires (10 ; 10a ; 10b ; 32a ; 32b ; 32c ; 35a ; 35b ; 42a ; 42b) touchant au moins une partie des surfaces de contact primaires (2 ; 6 ; 27 ; 39) lorsqu'un un élément de transmission primaire (2 ; 6 ; 27 ; 39) et un élément de transmission secondaire (9 ; 28 ; 34 ; 37 ; 40) sont mis en contact, et comprenant
des moyens de commande qui, lorsqu'un un élément de transmission primaire (2 ; 6 ; 27 ; 39) et un élément de transmission secondaire (9 ; 28 ; 34 ; 37 ; 40) sont mis en contact, sont réalisés pour la détermination de surfaces de contact primaires (3 ; 29) qui touchent une surface de contact secondaire (10 ; 10a ; 10b ; 32a ; 32b ; 32c ; 35a ; 35b ; 42a ; 42b), et qui sont réalisés pour l'établissement d'une liaison électrique entre les pôles individuels (15a, 15b) de l'appareil primaire et les pôles individuels (43a, 43b) de l'appareil secondaire par la commande des commutateurs respectifs (14) par l'intermédiaire des surfaces de contact primaires (3 ; 29) et des surfaces de contact secondaires (10 ; 10a ; 10b ; 32a ; 32b ; 32c ; 35a ; 35b ; 42a ; 42b) déterminées,
**caractérisé en ce que**
plusieurs surfaces de contact primaires en PE (4 ; 7 ; 30) sont réalisées sur l'élément de transmission primaire (2 ; 6 ; 27 ; 39), lesquelles sont agencées sur l'élément de transmission primaire (2 ; 6 ; 27 ; 39) de manière structurée entre les surfaces de contact primaires (3 ; 29) et électriquement isolée des surfaces de contact primaires (3 ; 29), **en ce que**
au moins une surface de contact secondaire en PE (11 ; 31a, 31b ; 41) est réalisée sur l'élément de transmission secondaire (9 ; 28 ; 34 ; 37 ; 40), laquelle est électriquement isolée des surfaces de contact secondaires (10 ; 10a ; 10b ; 32a ; 32b ; 32c ; 35a ; 35b ; 42a ; 42b), et **en ce que**
le système de mise en contact présente des moyens de positionnement (5, 12, 44, 45), lesdits moyens de positionnement, lors de la mise en contact de l'élément de transmission primaire (2 ; 6 ; 27 ; 39) avec l'élément de transmission secondaire (9 ; 28 ; 34 ; 37 ; 40), alignant l'élément de transmission secondaire (9 ; 28 ; 34 ; 37 ; 40) et l'élément de transmission primaire (2 ; 6 ; 27 ; 39) l'un par rapport à l'autre de telle sorte que ladite au moins une surface de contact secondaire en PE (11 ; 31a, 31b ; 41) touche au moins une surface de contact primaire en PE (4 ; 7 ; 30).

2. Système de mise en contact (1; 26; 33; 36; 38) selon la revendication 1, **caractérisé en ce que** lorsque l'élément de transmission primaire (2 ; 6 ; 27 ; 39) et l'élément de transmission secondaire (9 ; 28 ; 34 ; 37 ; 40) sont mis en contact, une liaison sans commutation est établie entre l'appareil primaire et l'appareil secondaire par au moins une surface de contact primaire en PE (4 ; 7 ; 39) et ladite au moins une surface de contact secondaire en PE (11 ; 31a, 31b ; 41).

3. Système de mise en contact (1; 26; 33; 36; 38) selon la revendication 2, **caractérisé en ce que** les surfaces de contact primaires en PE (4 ; 7 ; 30) sont solidaires du potentiel terrestre (18) ou **en ce que** ladite au moins une surface de contact secondaire en PE (11 ; 31a, 31b; 41) est solidaire du potentiel terrestre (18).

4. Système de mise en contact (1; 26; 33; 36; 38) selon l'une des revendications 1 à 3, **caractérisé en ce que** les moyens de positionnement sont formés par un élément de couplage magnétique, ledit élément de couplage magnétique présentant au moins une première partie et au moins une deuxième partie, ladite au moins une première partie étant réalisée dans l'élément de transmission primaire (2 ; 6 ; 27 ; 39) et ladite au moins une deuxième partie étant réalisée dans l'élément de transmission secondaire (9 ; 28 ; 34 ; 37 ; 40).

5. Système de mise en contact (1; 26; 33; 36; 38) selon la revendication 4, **caractérisé en ce que** ladite au moins une première partie de l'élément de couplage magnétique est formée par un électroaimant (12 ; 44) ou par un aimant permanent et ladite au moins une deuxième partie est formée par un élément ferromagnétique (5 ; 45), un électroaimant (12 ; 44) ou un aimant permanent, ou **en ce que** ladite au moins une première partie de l'élément de couplage magnétique est formée par un élément ferromagnétique (5 ; 45) et ladite au moins une deuxième partie est formée par un aimant électromagnétique (12 ; 44) ou un aimant permanent.

6. Système de mise en contact (1; 26; 33; 36; 38) selon la revendication 4 ou 5, **caractérisé en ce qu'**une première partie dudit au moins un élément de couplage magnétique est réalisée dans chaque surface de contact primaire en PE (4 ; 7 ; 30), et **en ce qu'**une deuxième partie est réalisée dans ladite au moins une surface de contact secondaire en PE (11 ; 31a, 31b; 41).

7. Système de mise en contact selon l'une des revendications 1 à 3, **caractérisé en ce que** l'élément de transmission primaire présente une surface primaire et **en ce que** l'élément de transmission secondaire présente une surface secondaire, les moyens de positionnement étant formés par une première structure spatiale de la surface primaire et une deuxième structure spatiale de la surface secondaire.

8. Système de mise en contact selon la revendication 7, **caractérisé en ce que** la première structure spatiale de la surface primaire représente la forme négative de la structure spatiale de la surface secondaire.

9. Système de mise en contact selon l'une des revendications 1 à 3, **caractérisé en ce que** les moyens de positionnement sont formés par une unité de déplacement, ladite unité de déplacement agissant sur l'élément de transmission primaire et/ou secondaire et étant réalisée pour la mise en contact de l'élément de transmission primaire avec l'élément de transmission secondaire, et par au moins un capteur, ledit au moins un capteur étant réalisé dans l'élément de transmission secondaire et/ou dans l'élément de transmission primaire, ledit au moins un capteur saisissant une position relative entre l'élément de transmission primaire et l'élément de transmission secondaire lors de la mise en contact de l'élément de transmission primaire avec l'élément de transmission secondaire, et l'unité de déplacement étant apte à être commandée conformément à la position relative saisie de telle sorte que ladite au moins une surface de contact secondaire en PE touche au moins une surface de contact primaire en PE.

10. Système de mise en contact (1; 26; 33; 36; 38) selon l'une des revendications 1 à 9, **caractérisé en ce que** l'élément de transmission primaire (2 ; 6 ; 27 ; 39) est réalisé pour une voie d'un parking, d'une zone de croisement ou d'un garage, et **en ce que** l'appareil primaire est formé par une unité d'alimentation en énergie (16) et/ou **en ce que** l'élément de transmission secondaire (9 ; 28 ; 34 ; 37 ; 40) est apte à être abaissé et remonté sur un véhicule, en particulier un véhicule à entraînement électrique, et **en ce que** l'appareil secondaire est formé par un circuit de charge (21) du véhicule.

11. Système de mise en contact (1; 26; 33; 36; 38) selon l'une des revendications 1 à 10, **caractérisé en ce que** les surfaces de contact primaires en PE (4 ; 7 ; 30) et ladite au moins une surface de contact secondaire en PE (11 ; 31a, 31b; 41) sont réalisées rondes ou polygonales, les moyens de positionnement, lors de la mise en contact de l'élément de transmission primaire (2 ; 6 ; 27 ; 39) et de l'élément de transmission secondaire (9 ; 28 ; 34 ; 37 ; 40), alignant l'élément de transmission secondaire (9 ; 28 ; 34 ; 37 ; 40) et l'élément de transmission primaire (2 ; 6 ; 27 ; 39) l'un par rapport à l'autre de telle sorte que ladite au moins une surface de contact secondaire en PE (11 ; 31a, 31b ; 41) recouvre entièrement au moins une surface de contact primaire en PE (4 ; 7 ; 30).

12. Système de mise en contact (1; 26; 33; 36; 38) selon la revendication 11, **caractérisé en ce que** les surfaces de contact primaires (3 ; 29) de l'élément de transmission primaire (2 ; 6 ; 27 ; 39) sont agencées face aux surfaces de contact secondaires (10 ; 10a ; 10b ; 32a ; 32b ; 32c ; 35a ; 35b ; 42a ; 42b) de l'élément de transmission secondaire (9 ; 28 ; 34 ; 37 ; 40), de sorte que lorsque ladite au moins une surface de contact secondaire en PE (11 ; 31a, 31b ; 41) touche au moins une surface de contact primaire en PE (4 ; 7 ; 30), chaque surface de contact secondaire (10; 10a; 10b; 32a ; 32b ; 32c; 35a ; 35b ; 42a ; 42b) recouvre entièrement une surface de contact primaire (3 ; 29).

13. Système de mise en contact (1; 26; 33; 36; 38) selon l'une des revendications 1 à 12, **caractérisé en ce que** les moyens de positionnement, lors de la mise en contact de l'élément de transmission primaire (2 ; 6 ; 27 ; 39) avec l'élément de transmission secondaire (9 ; 28 ; 34 ; 37 ; 40), alignent l'élément de transmission secondaire (9 ; 28 ; 34 ; 37 ; 40) de manière angulaire et/ou en translation par rapport à l'élément de transmission primaire (2 ; 6 ; 27 ; 39).

14. Système de mise en contact (26; 33; 36; 38) selon l'une des revendications 1 à 13, **caractérisé en ce que** ladite au moins une surface de contact secondaire en PE (31a, 31b ; 41) est agencée sur l'élément de transmission secondaire (28 ; 34 ; 37 ; 40) en entourant les surfaces de contact secondaires (32a ; 32b ; 32c ; 35a ; 35b ; 42a ; 42b), ladite au moins une surface de contact secondaire en PE (31a, 31b ; 41) étant en particulier réalisée de manière annulaire.

15. Système de mise en contact (1; 26; 33; 36; 38) selon l'une des revendications 1 à 14, **caractérisé en ce qu'**une tension alternative est appliquée sur lesdits au moins deux pôles (15a ; 15b) de l'appareil primaire et/ou sur lesdits au moins deux pôles (43a ; 43b) de l'appareil secondaire.

16. Système de mise en contact (26) selon l'une des revendications 1 à 15, **caractérisé en ce qu'**au moins un pôle de l'appareil secondaire et un pôle de l'appareil primaire sont réalisés pour l'échange de données entre l'appareil primaire et l'appareil secondaire.
